# EUROPEAN PATENT SPECIFICATION

(11) **EP 2 764 231 B1**
(45) Date of publication and mention of the grant of the patent: **07.06.2017**
(21) Application number: 12769434.7
(22) Date of filing: 05.10.2012
(51) Int. Cl.: F02M 26/32, F28D 21/00, F28F 1/40, F28D 7/16, F28F 3/02

(54) **HEAT EXCHANGER FOR GASES, ESPECIALLY ENGINE EXHAUST GASES**
WÄRMETAUSCHER FÜR GASE, INSBESONDERE MOTORABGASE
ECHANGEUR THERMIQUE POUR GAZ, EN PARTICULIER POUR DES GAZ D'ÉCHAPPEMENT DE MOTEURS

(30) Priority: 05.10.2011 ES 201131607 P
(43) Date of publication of application: 13.08.2014
(73) Proprietor: Valeo Termico S.A., 50011 Zaragoza (ES)
(72) Inventor: DE FRANCISCO MORENO, Juan Carlos, E-50011 Zaragoza (ES); BRAVO RODRIGUEZ, Yolanda, E-50011 Zaragoza (ES); PUERTOLAS SANCHEZ, Fernando, E-50011 Zaragoza (ES); MARTINEZ JIMENEZ, Victor, E-50011 Zaragoza (ES)
(74) Representative: Metz, Gaëlle
(86) International application number: PCT/EP2012/069781
(87) International publication number: WO 2013/050566

(56) References cited:
- EP-A1- 1 528 348
- WO-A2-2007/104580
- JP-A- 2003 279 293
- JP-A- 2010 127 171
- US-A1- 2007 221 181
- US-A1- 2008 047 685
- US-A1- 2010 071 675

## Description

The present invention relates to a heat exchanger for gases, especially engine exhaust gases.

The invention applies especially to engine exhaust gas recirculation (EGR) exchangers.

### BACKGROUND OF THE INVENTION

The principal function of EGR exchangers is the exchange of heat between the exhaust gases and the coolant fluid, in order to cool the gases.

Currently, EGR heat exchangers are widely used in diesel applications in order to reduce emissions, and are also used in gasoline applications to reduce fuel consumption.

The market is tending to reduce engine size and to use EGR heat exchangers not only in high-pressure (HP) applications but also in low-pressure (LP) applications; both applications influence the design of EGR heat exchangers. Vehicle manufacturers require EGR heat exchangers that offer higher performance levels and, in turn, the space available to receive the exchanger and the latter's components is increasingly restricted and more difficult to allow for.

In addition, in many applications, the flow of coolant fluid available for cooling the exhaust gases tends to be smaller, although exchanger performance levels have been on the increase.

The current configuration of EGR exchangers on the market is that of a metal heat exchanger generally produced from stainless steel or aluminium.

Basically, there are two types of EGR heat exchanger: a first type comprises a casing inside which there is a bundle of parallel tubes for the passage of the gases, the coolant circulating through the casing, outside the tubes; and the second type comprises a series of parallel plates that form the heat-exchange surfaces, such that the exhaust gases and the coolant circulate between two plates, in alternating layers, and there may also be fins for improving heat exchange.

In the case of tube-bundle heat exchangers, the join between the tubes and the casing may be of different types. Generally, the tubes are fixed via their ends between two support plates coupled at either end of the casing, the two support plates having a plurality of orifices for receiving the respective tubes.

Said support plates are fixed in turn to means of connection with the recirculation line, which means may consist of a V-connection or, alternatively, a peripheral connection lip or flange, depending on the design of the recirculation line where the exchanger is assembled. Said flange may be assembled together with a gas reservoir, such that the gas reservoir is an intermediate component between the casing and the flange or, alternatively, the flange may be assembled directly onto the casing. This latter design is used frequently when the exchanger is joined directly to an EGR valve, which controls the passage of exhaust gases therethrough.

In some EGR-circuit applications, it is necessary to cool the EGR valve. In such cases, the customary design includes a by-pass conduit that conveys the cooling fluid circulating through the EGR exchanger to the EGR valve. Owing to the fact that the EGR exchanger is assembled onto the EGR circuit via a flange or peripheral lip, the coolant-fluid by-pass conduit must be produced through said flange.

In both types of EGR exchanger, the majority of the components are made from metal such that they are assembled by mechanical means and later furnace welded or arc or laser welded to guarantee the appropriate leaktightness required for this application.

Furthermore, the gas circuit may be of linear type, which is also called "I" type, in which the gas inlet and gas outlet are arranged at opposite ends; or, alternatively, said circuit may be in the form of a "U", in which the gas inlet and gas outlet are arranged so as to be adjacent at one and the same open end, the opposite end being closed, and defining an outward path and a return path. In this latter case, the closed end for the return of gases is usually constituted by a closed reservoir.

EGR exchangers with substantially rectangular-cross-section tubes are known and use fins arranged inside said tubes to enhance heat transfer via these secondary surfaces, and therefore the total heat-exchange surface is increased.

There are various types of fins for tubes such as, for example, the fin known as an "offset fin", which has a repeated substantially rectangular profile configuration in the transverse direction, with intercommunicating zig-zag pathways in the longitudinal direction or, for example, the fin known as a "herringbone fin", with undulating channels.

A principal object of EGR heat exchangers is to achieve an appropriate distribution of the gas flow inside the gas-passage channels, in this case inside the tubes, such that a uniform heat flow can be guaranteed throughout the exchanger and the entire available exchange area can be utilized. Therefore, the form of the gas reservoir and ther elements that may be assembled onto the EGR heat exchanger in the gas-passage pathway, especially in the inlet zone, is important. The design of these components is essential within the overall design of the exchanger. However, there are external limitations that make it difficult to optimize this design since the form and volume are determined by the environment where the EGR exchanger is located.

The components arranged at the gas-flow inlet are basically a gas reservoir or a flange that incorporates an interface with an EGR valve. In the case of the gas reservoir, the length, alignment with the casing axis and general form are significant in terms of gas-flow distribution. In the case of the flange, the interface of the flange is also important, especially in the median part where a wall is generally required in "U" configurations to ensure the degree of leaktightness or the support for the valve "flap" gate.

In particular, heat exchangers of "U" configuration, with an EGR valve located at the inlet and which require an internal partitioning wall incorporated into the flange, may give rise to problems of distribution of the gases and coolant fluid if said internal wall occupies a significant amount of space in the interface of the flange.

In this case, suitable distribution of the tubes has to be achieved if they are to be placed in the gas-flow-circulation zone. This gives rise to two different problems: first, it means an increase in the total volume of the flange, since a greater volume has to be occupied if the heat-exchange surface has to be maintained in order to ensure performance levels and also efficiency and permeability; second, it means significant modifications in the distribution of the coolant-fluid flow inside the casing since the distance between tubes is dependent on the definition of this internal wall. This gives rise to the appearance of potential failures if preferred coolant-fluid pathways are created, thereby giving rise, in other areas, to zones of low coolant-fluid-flow velocity, which can cause the phenomenon of boiling.

US 2008/0047685 A1 discloses a heat exchanger for exhaust gas with a "U" shape, comprising a flange with a partition wall, partitioning the gas-inlet and the gas-outlet.

### DESCRIPTION OF THE INVENTION

The object of the heat exchanger for gases, especially engine exhaust gases, of the present invention is to obviate the drawbacks of known exchangers by providing an optimum heat transfer at the gas-flow inlet, maintaining the compact nature of the heat exchanger.

The invention is related to a heat exchanger according to independent claim 1.

Therefore, the use of said intercommunicating fins makes it possible to maintain the compact nature of the exchanger since it is unnecessary to increase the size of the tubes or of the connection means in order to enlarge the heat-transfer area.

Furthermore, this configuration of the fins makes it possible to maintain the distance between tubes, and therefore preferred coolant-flow pathways are not created. The fins may have a repeated substantially rectangular profile configuration in the transverse direction, with intercommunicating zig-zag pathways in the longitudinal direction.

According to the invention, the exchanger is of the type in the shape of a "U", including connection means constituted by a flange associated with the bundle of tubes at the gas-inlet and gas-outlet end, and including a gas reservoir coupled at the opposite end for the return of the gas flow, said connection flange being provided with a transverse wall partitioning the gas-inlet and gas-outlet pathway and capable of reducing, by blowing, the transverse area of the tubes at least in the gas-flow-inlet zone.

The use of the intercommunicating fins inside the tubes avoids the appearance of a dead zone caused by the blowing area of the partitioning wall, and therefore it is possible to maintain properly effective heat transfer in the gas-flow-inlet zone. The connection means may include at least one gas reservoir associated with the bundle of tubes in the gas-flow-inlet zone, said gas reservoir comprising a structural configuration adapted to the engine environment, which is capable of reducing the transverse area of the tubes in the gas-flow-inlet zone.

Similarly, the use of intercommunicating fins inside the tubes makes it possible to increase the heat transfer in the gas-flow-inlet zone.

### BRIEF DESCRIPTION OF THE DRAWINGS

With a view to facilitating the description of that which has been set forth above, drawings are attached in which, schematically and solely by way of non-limiting example, a practical case is shown of an embodiment of the heat exchanger for gases, especially engine exhaust gases, of the invention, wherein:
Figure 1 is a schematic longitudinal section of the heat exchanger according to one embodiment of the invention;
Figure 2 is a front view of a connection flange that incorporates a cooling by-pass conduit of the EGR valve;
Figure 3 is a schematic transverse section of a tube with a fin arranged within according to the invention;
Figure 4 is a plan view of a fin according to one embodiment of the invention;
Figure 5 is a transverse section of the fin on the line V-V in Figure 4;
Figure 6 is an enlarged detail of the fin, in perspective, showing the mutually intercommunicating channels; and
Figure 7 is a perspective view of the fin, showing the pathways through which the gas flow is able to pass.

### DESCRIPTION OF A PREFERRED EMBODIMENT

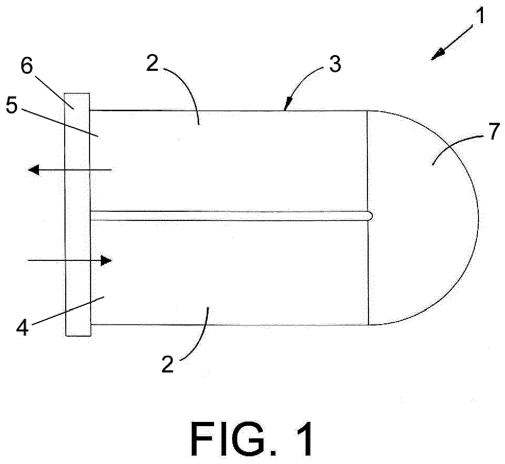

According to one embodiment of the invention shown in Figures 1 to 7, the heat exchanger 1 for gases, especially engine exhaust gases, comprises a bundle of tubes 2 arranged inside a casing 3 defining a gas inlet 4 and a gas outlet 5 designed for the circulation of the gases with heat exchange with a coolant fluid. In this case, the tubes 2 have a substantially rectangular transverse section.

In this embodiment, the heat exchanger 1 is of the type in the form of a "U", in which the gas inlet 4 and the gas outlet 5 are arranged so as to be adjacent at one and the same open end, the opposite end being closed, defining an outward path and a return path shown by the respective arrows, as may be seen in Figure 1. At the open end, there is a flange 6 for connection to the recirculation line, whilst at the closed end there is a gas reservoir 7 for the return of the gas flow.

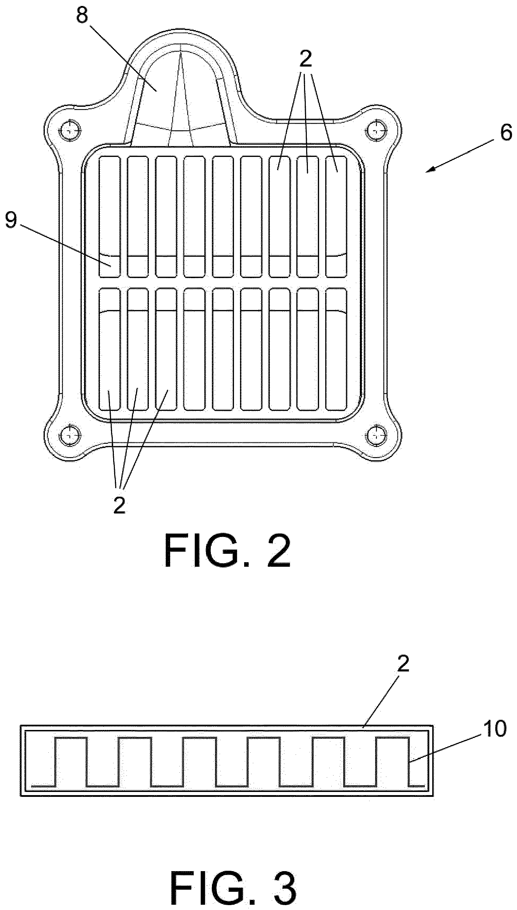

As may be seen in Figure 2, there is also a conduit 8 incorporated into said connection flange 6 designed for the circulation of coolant fluid towards an EGR valve (not shown), which controls the passage of gases through the exchanger. Said connection flange 6 is provided with a transverse wall 9 partitioning the gas-inlet 4 and gas-outlet 5 pathway. Said partitioning wall 9 has a width such that it overlaps part of the transverse area of the tubes 2 in the gas-flow-inlet zone, and therefore the gas-inlet 4 area is smaller than the actual transverse area of the bundle of tubes 2.

In order to enhance the gas-flow distribution without having to increase the size of the tubes 2 or the size of the flange 6, or to separate the tubes 2 from one another in order to avoid blowing with the partitioning wall 9, disrupting means in the form of fins 10 arranged inside the tubes 2 are used, as may be seen in Figure 3.

Said fins 10 define intercommunicating pathways 11 for the passage of the gas flow therethrough, thereby improving the distribution of the flow of gases inside the tubes 2.

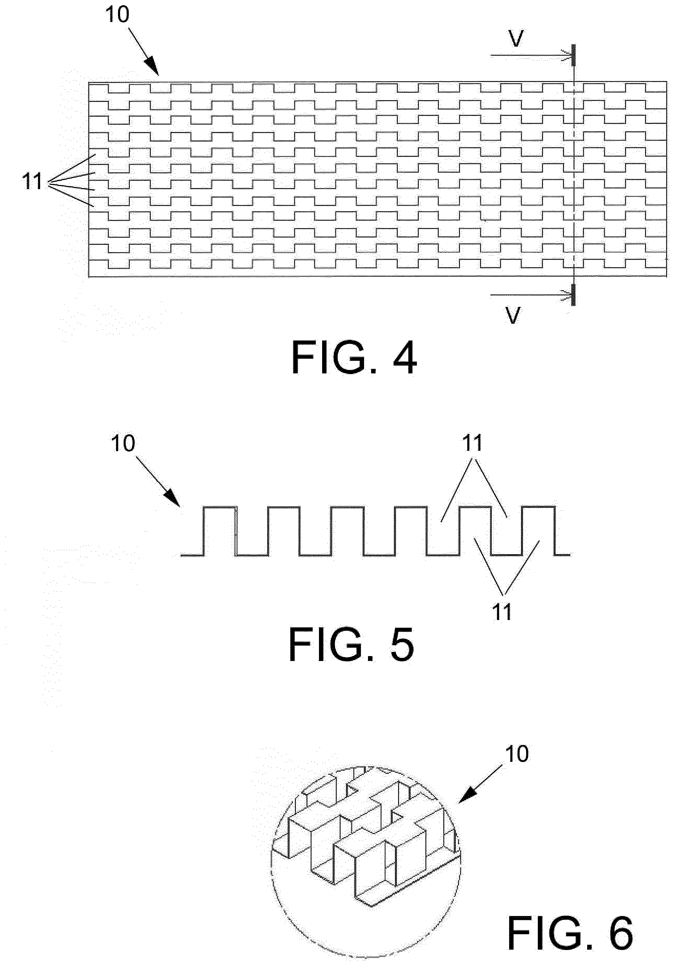

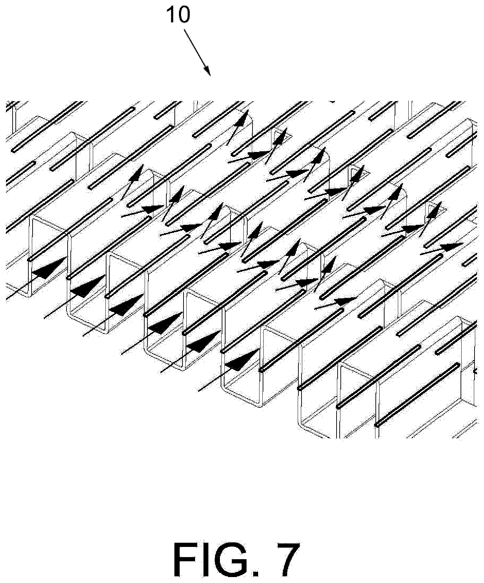

According to an embodiment shown in Figures 4 to 6, the fins 10 have a repeated substantially rectangular profile configuration in the transverse direction, with intercommunicating zig-zag pathways 11 in the longitudinal direction. Likewise, Figure 7 shows the pathways through which the gas flow is able to pass in accordance with the direction of the illustrated arrows.

The use of said mutually intercommunicating offset-type fins 10 makes it possible to maintain the distance between tubes 2 at standard values. It is assumed that a portion of the inlet of the tubes 2 may be covered since the gas flow may equalize along the tubes 2, resulting in a minimal impact on performance levels.

Furthermore, the use of said intercommunicating fins 10 makes it possible to maintain the compact nature of the exchanger 1 since it is unnecessary to increase the size of the tubes 2 or of the connection flange 6 in order to enlarge the heat-transfer area.

In the case of tubes with a small cross section, the blowing effect produced by the partitioning wall 9 is enhanced and therefore the use of said fins 10 is especially indicated in this case.

It should be pointed out that there may be other applications of this type of intercommunicating fin 10 when the gas-inlet 4 area is smaller than the actual transverse area of the bundle of tubes 2. For example, in those cases where a gas reservoir that, owing to the configuration thereof, gives rise to poor distribution of the gas flow in the tubes 2, the use of intercommunicating fins 10 is appropriate because the equalization of the gas-flow distribution occurs along the tubes 2.

Alternatively, in a "U"-configuration exchanger the intercommunicating fins 10 may be used solely for the return pathway where the distribution of the gas flow is more critical owing to the limited space available for definition of the gas reservoir 7 in the "U"-form exchanger.

Although a "U"-configuration heat exchanger has been represented, the fins 10 of the invention may also be used in "I" linear exchangers.

## Claims

1. Heat exchanger (1) for gases, especially engine exhaust gases, which comprises a bundle of tubes (2) arranged inside a casing (3) defining a gas inlet (4) and gas outlet (5), which are designed for the circulation of the gases with heat exchange with a coolant fluid, the gas-inlet area (4) being smaller than the actual transverse area of the bundle of tubes (2), and means for disrupting the gas flow arranged inside each tube (2), the disruption means including a plurality of fins (10) that define intercommunicating pathways (11) for the passage of the gas flow therethrough, thereby improving the distribution of the gas flow inside the tubes (2), the exchanger (1) being of the type in the shape of a "U", including connection means constituted by a flange (6) associated with the bundle of tubes (2) at the gas-inlet (4) and gas-outlet (5) end, and including a gas reservoir (7) coupled at the opposite end for the return of the gas flow, said connection flange (6) being provided with a transverse wall (9) partitioning the gas-inlet (4) and gas-outlet (5) pathway **characterized in that** said connection flange is capable of reducing, the transverse area of the tubes (2) at least in the gas-flow-inlet (4) zone, said partitioning wall (9) having a width such that it overlaps part of the transverse area of the tubes (2) in the gas-flow-inlet zone.

## Patentansprüche

1. Wärmetauscher (1) für Gase, insbesondere Motorabgase, umfassend ein Bündel Rohre (2), die in einem Gehäuse (3) angeordnet sind, das einen Gaseinlass (4) und einen Gasauslass (5) definiert, und zum Zirkulieren der Gase in Wärmeaustausch mit einem Kühlmittelfluid ausgeführt sind, wobei die Gaseinlassfläche (4) kleiner als die tatsächliche Querfläche des Bündels Rohre (2) ist, und Mittel zum Unterbrechen des Gasstroms, die in jedem Rohr (2) angeordnet sind, wobei die Unterbrechungsmittel mehrere Rippen (10) umfassen, die Verbindungswege (11) für das Passieren des Gasstroms dort hindurch definieren, wodurch die Unterbrechung des Gasstroms in den Rohren (2) verbessert wird, wobei der Wärmetauscher (1) der Art in Form eines "U" ist, die Verbindungsmittel enthält, welche durch einen Flansch (6), der mit dem Bündel Rohre (2) am Ende des Gaseinlasses (4) und Gasauslasses (5) verbunden ist, gebildet werden, und einen Gasspeicher (7) enthält, der am gegenüberliegenden Ende für die Rückführung des Gasstroms gekoppelt ist, wobei der Verbindungsflansch (6) mit einer Querwand (9) versehen ist, die den Weg des Gaseinlasses (4) und des Gasauslasses (5) trennt,
**dadurch gekennzeichnet, dass** der Verbindungsflansch die Querfläche der Rohre (2) zumindest im Bereich des Gasstromeinlasses (4) verkleinern kann, wobei die Trennwand (9) eine solche Breite aufweist, dass sie einen Teil der Querfläche der Rohre (2) im Bereich des Gasstromeinlasses überlappt.

## Revendications

1. Échangeur thermique (1) pour des gaz, en particulier des gaz d'échappement de moteur, comprenant un faisceau de tubes (2) disposé à l'intérieur d'un carter (3) définissant une entrée de gaz (4) et une sortie de gaz (5) qui sont conçues pour la circulation des gaz avec échange thermique avec un fluide réfrigérant, la zone d'entrée de gaz (4) étant plus petite que la section transversale effective du faisceau de tubes (2), et des moyens pour perturber le flux de gaz étant disposés à l'intérieur de chaque tube (2), les moyens de perturbation comportant une pluralité d'ailettes (10) qui définissent des chemins d'intercommunication (11) pour le passage de l'écoulement de gaz à travers eux, ce qui améliore la répartition du flux de gaz à l'intérieur des tubes (2), l'échangeur (1) étant du type en forme de U, incluant des moyens de connexion constitués par une bride (6) associée au faisceau de tubes (2) au niveau de l'extrémité d'entrée de gaz (4) et de sortie de gaz (5), et comprenant un réservoir de gaz (7) accouplé à l'extrémité opposée pour le retour du flux de gaz, ladite bride de connexion (6) étant pourvue d'une paroi transversale (9) divisant le chemin d'entrée de gaz (4) et le chemin de sortie de gaz (5), **caractérisé en ce que** ladite bride de connexion est apte à réduire la section transversale des tubes (2) au moins dans la zone d'entrée de flux de gaz (4), ladite paroi de séparation (9) ayant une largeur de telle sorte qu'elle chevauche une partie de la section transversale des tubes (2) dans la zone d'entrée de flux de gaz.
